# EUROPÄISCHE PATENTSCHRIFT

(11) **EP 2 948 362 B1**
(45) Veröffentlichungstag und Bekanntmachung des Hinweises auf die Patenterteilung: **01.03.2017**
(21) Anmeldenummer: 13792667.1
(22) Anmeldetag: 18.11.2013
(51) Int. Cl.: B62D 21/11, B62D 29/04

(54) **TRÄGERSTRUKTUR UND VERFAHREN ZUM HERSTELLEN EINER TRÄGERSTRUKTUR**
SUPPORT STRUCTURE AND METHOD OF PRODUCING A SUPPORT STRUCTURE
STRUCTURE DE SUPPORT ET SON PROCÉDÉ DE FABRICATION

(30) Priorität: 24.01.2013 DE 102013201075
(43) Veröffentlichungstag der Anmeldung: 02.12.2015
(73) Patentinhaber: ZF Friedrichshafen AG, 88046 Friedrichshafen (DE)
(72) Erfinder: WOLF, Daniel, 88048 Friedrichshafen (DE)
(86) Internationale Anmeldenummer: PCT/EP2013/074005
(87) Internationale Veröffentlichungsnummer: WO 2014/114381

(56) Entgegenhaltungen:
- EP-A1- 0 594 131
- EP-A1- 2 578 473
- EP-A2- 2 527 231
- DE-U1- 9 002 839

## Beschreibung

Die Erfindung betrifft eine Trägerstruktur, insbesondere einen Achsträger für ein Kraftfahrzeug, gemäß dem Oberbegriff des Anspruchs 1 sowie ein Verfahren zum Herstellen einer derartigen Trägerstruktur.

Die gattungsgemäße EP 2 527 231 A2 offenbart eine solche Trägerstruktur.

Zur Aufnahme von Fahrwerksbauteilen, wie beispielsweise Lenker, Federung, etc., verfügen Kraftfahrzeuge (PKW und LKW) über eine Trägerstruktur in Form eines Achsträgers bzw. Hilfsrahmens. Dieser Achsträger verteilt die Lasten der Fahrwerksbauteile an geeignete Anschlussstellen der Karosserie und bietet dabei gleichzeitig teilweise auch eine elastische Entkopplung des Fahrwerks gegenüber der Karosserie. Die elastische Entkopplung ist besonders vorteilhaft im Hinblick auf den Fahrkomfort und die beim Fahren auftretende Akustik. Darüber hinaus dient der Achsträger auch als Montagehilfe des Fahrwerks als voreingestelltes Modul.

Im Stand der Technik sind Achsträger bekannt, welche aus metallischen Schweißkonstruktionen, beispielsweise in Stahlblechbauweisen oder in Aluminium-Gussbauweisen kombiniert mit Profilen, bestehen. Darüber hinaus ist es im Stand der Technik ebenfalls bekannt, Achsträger aus faserverstärktem Kunststoff herzustellen.

Beispielsweise ist aus DE 695 22 950 T3 ein Front- und/oder Heckaufhängungsaufbau mit einem im Wesentlichen Omega-förmigen Fahrwerkbauteil aus faserverstärktem Kunststoff bekannt, welches in einem zweischaligen Hilfsrahmen integriert ist. Der Hilfsrahmen kann dabei aus Stahl, Aluminium oder Magnesium hergestellt sein kann. Alternativ kann der Hilfsrahmen auch aus faserverstärkten Kunststoff hergestellt sein.

Bisher existiert aufgrund der komplexen Anforderungen im Hinblick auf die mechanischen Eigenschaften, wie Festigkeit und Steifigkeit, an den Krafteinleitungsstellen der bekannten Hilfsrahmen bzw. Achsträger noch keine Lösung für eine wirtschaftliche serienmäßige Herstellung. Insbesondere ist hierbei problematisch, dass die bekannten Konstruktionen elastische Lager beispielsweise in Form von Gummilagern benötigen, welche derart ausgebildet sein müssen, dass sie parallel zu der Fahrzeuglängsachse eine hohe Elastizität aufweisen, jedoch senkrecht zu der Fahrzeuglängsachse eine hohe Steifigkeit aufweisen. Ein zusätzlicher Nachteil im Hinblick auf die bekannten Konstruktionen ist darüber hinaus, dass bei Achsträgern bzw. Hilfsrahmen aus faserverstärktem Kunststoff an den Ecken bei der Herstellung viel überstehendes Material auftritt, welches in einem zusätzlichen Verfahrensschritt entfernt, insbesondere weggeschnitten, werden muss.

Daher ist es eine Aufgabe der vorliegenden Erfindung, eine Trägerstruktur, insbesondere einen Achsträger für ein Kraftfahrzeug, bereitzustellen, welche wirtschaftlich herstellbar ist und dennoch die mechanischen Anforderungen, insbesondere an den Krafteinleitungsstellen der Trägerstruktur, erfüllt. Weiterhin ist es eine Aufgabe der vorliegenden Erfindung ein entsprechendes Herstellungsverfahren für eine derartige Trägerstruktur bereitzustellen.

Diese Aufgabe wird durch eine Trägerstruktur mit den Merkmalen gemäß Anspruch 1 und ein Verfahren zum Herstellen einer Trägerstruktur mit den Merkmalen gemäß Anspruch 14 gelöst. Bevorzugte Ausführungsformen der Erfindung sind in den jeweiligen abhängigen Ansprüchen definiert.

Es wird eine Trägerstruktur, insbesondere ein Achsträger für ein Kraftfahrzeug, bereitgestellt, welche als ein- oder mehrschalig ausgebildetes Rahmenelement aus faserverstärktem Kunststoff hergestellt ist, wobei das Rahmenelement zumindest eine elastische Anschlussstelle zum Anschluss an ein Aggregat aufweist, wobei die zumindest eine elastische Anschlussstelle einstückig mit dem Rahmenelement ausgebildet ist. Durch diese Konfiguration der einstückig mit dem Rahmenelement ausgebildeten elastischen Anschlussstellen kann eine wirtschaftliche Herstellung bei gleichzeitiger Erfüllung der hohen mechanischen Anforderungen an die Trägerstruktur gewährleistet werden. Auch werden durch elastisches Ausbilden der Anschlussstellen selbst zusätzliche Gummilager vermieden, was die Wirtschaftlichkeit des Herstellungsverfahrens weiter verbessert, da einerseits Kosten für die zusätzlichen Gummilager eingespart werden können und andererseits auch ein zusätzlicher Herstellungsschritt zu Montage der Gummilager entfallen kann.

Gemäß einer bevorzugten Ausführungsform weist die Trägerstruktur mindestens zwei elastische Anschlussstellen, insbesondere vier elastische Anschlussstellen auf. Die Zahl der vorgesehenen elastischen Anschlussstellen kann je nach Einsatzgebiet bzw. Anforderungen an die Trägerstruktur variiert werden.

Gemäß noch einer bevorzugten Ausführungsform ist das Rahmenelement zweischalig mit einer oberen Schale und einer unteren Schale ausgebildet, wobei zwischen der oberen Schale und der unteren Schale ein Hohlraum gebildet ist. Alternativ kann das Rahmenelement jedoch auch einschalig mit einem offenen Profil ausgebildet sein, was Materialkosten einspart und einen zusätzlichen Schritt des Aneinanderfügens, beispielsweise mittels Kleben, der oberen und unteren Schale überflüssig macht.

Vorzugsweise weist das Rahmenelement einen im Wesentlichen S-förmigen Querschnitt auf. Die S-förmige Ausbildung hat den Vorteil, dass bei der Verklebung der oberen und unteren Schale diese auf im Wesentlichen geraden Flächen erfolgen kann.

Darüber hinaus ist es vorteilhaft, wenn die zumindest eine elastische Anschlussstelle in Richtung einer Längsachse des Kraftfahrzeugs im Wesentlichen elastisch ist und in einer Richtung senkrecht zu der Längsachse im Wesentlichen steif ist. Durch die hohe Elastizität in Fahrzeuglängsrichtung wird eine parallele Verschiebung entlang der Fahrzeuglängsachse nach hinten und vorne ermöglicht, was der Reduzierung der Stößigkeit des Fahrwerks beispielsweise beim Überfahren von Fahrbahnunebenheiten dient. In der Praxis kann die Verschiebung bis zu 6 mm betragen. Weiterhin sei angemerkt, dass die Elastizität in den elastischen Anschlussstellen durch einen geringen Querschnitt und ein geringes Flächenträgheitsmoment der Trägerstruktur im Bereich der elastischen Anschlussstellen erzielt wird. Die hohe Steifigkeit in der Querrichtung wird dagegen durch die Kraftübertragung in der gesamten Fläche, welche als Druck- oder Zugstrebe ausgebildet ist bzw. wirkt, ermöglicht. Dies wird durch einen entsprechenden Verlauf der Fasern in dem Kunststoff in einer Seitenfläche der Trägerstruktur sichergestellt.

Die zumindest eine elastische Anschlussstelle ist durch textile Faltenbildung gebildet, was das Herstellungsverfahren vereinfacht.

Vorzugsweise ist der faserverstärkte Kunststoff mit langfaserigen und/oder endlosfaserigen Kunststofffasern (Organoblech) verstärkt. Insbesondere Endlosfasern sind im Hinblick auf die textile Faltenbildung vorteilhaft.

Vorteilhaft ist auch, wenn das Rahmenelement im Bereich der zumindest einen elastischen Anschlussstelle verjüngt ausgebildet ist. Insbesondere ist hierbei in dem Bereich der Anbindung an die Fahrzeugkarosserie je nach Anforderung an die Anschlusssteifigkeit der durch die obere und untere Schale gebildete Hohlraum verjüngt ausgebildet. Dies reduziert die oben erwähnte Stößigkeit des Fahrwerks beim Überfahren von Fahrbahnunebenheiten noch weiter.

Gemäß einer weiteren bevorzugten Ausführungsform weist das Rahmenelement einen im Wesentlichen rechteckigen Körper mit vier Eckabschnitten auf, wobei von jedem Eckabschnitt eine elastische Anschlussstelle in der Richtung quer zur Längsachse des Kraftfahrzeugs abragt. Es ist dabei vorteilhaft, wenn die elastischen Anschlussstellen im Wesentlichen in Fahrzeugquerrichtung angeordnet sind bzw. von der Trägerstruktur abragen, so dass die im Stand der Technik verwendeten Gummilager hierdurch effektiv substituiert werden können und die oben genannten elastischen Eigenschaften in Fahrzeuglängsrichtung erzielt werden können.

Das Rahmenelement kann jedoch alternativ lediglich zwei elastische Anschlussstellen aufweisen, welche dann durch ein bügelartiges Element verbunden sind.

Ein weiterer Vorteil kann dadurch erzielt werden, dass die Trägerstruktur mit Verstärkungselementen, insbesondere mit Verstärkungsrippen, ausgebildet ist, wobei die Verstärkungselemente aus Kunststoff-Pressmassen, beispielsweise langfaserverstärkte Thermoplaste oder SMC/BMC (Duroplast), hergestellt sind. Hierdurch wird auf vorteilhafte Weise sichergestellt, dass die hohen mechanischen Anforderungen an die Trägerstruktur erfüllt werden können und es nicht zu einem vorzeitigen Versagen der Trägerstruktur kommt. Die Kunststoff-Pressmassen können innen und/oder außen an dem Rahmenelement vorgesehen sein. Die textile Verstärkungsstruktur kann ein Gelege, Gewebe, Gestrick, Gewirk oder eine Matte sein und quasi endlose oder geschnittene Langfasern enthalten. Die textilen Halbzeuge können trocken oder vorimprägniert sein, ein Hybridgarn enthalten oder ein Bindermaterial zum Fixieren trockener Lagen enthalten. Zum Aufbau und Formen trockener textiler Halbzeuge ist der Einsatz thermoplastischer oder reaktiver Binder, beispielsweise auf der Basis einer Harzkomponente, vorteilhaft. Als Harze sind Thermoplaste wie Polyamide (PA), Polysulfone (PS), Polypropylen (PP) oder PEEK einsetzbar. Als Duroplaste sind Epoxid-Harze, Polyurethane, Venylester oder hybride Harzsysteme geeignet. Als Herstellungsprozess ist vorzugsweise ein Heißpressen für vorimprägnierte Halbzeuge und ein Liquid Composite Moulding (LCM) Verfahren (RIM, RTM, etc.) für die Verwendung trockener textiler Halbzeuge implementierbar.

Gemäß einer weiteren bevorzugten Ausführungsform sind die obere Schale und die untere Schale mittels Fügen, insbesondere durch Kleben, Nieten oder Schrauben, oder durch Schweißen miteinander verbunden. Schweißen mittels Ultraschall, Laser oder Vibration ist insbesondere dann vorteilhaft, wenn für die Trägerstruktur thermoplastische Werkstoffe verwendet werden.

Der Hohlraum kann von einem Material mit geringer Dichte, insbesondere von einem Schaum, Waben oder Balsaholz, ausgefüllt sein. Dies kann im Herstellungsprozess vorteilhafterweise dazu genutzt werden, um die obere und untere Schale in einem Schritt zu Formen.

Gemäß der Erfindung wird weiterhin ein Verfahren zum Herstellen einer Trägerstruktur bereitgestellt, wobei das Verfahren die folgenden Schritte umfasst: Herstellen eines textilen Halbzeugs oder eines Halbzeugs aus textilverstärktem Kunststoff zur Bildung der Trägerstruktur mit einem im Wesentlichen rechteckigen Körper mit vier Eckabschnitten; Verformen des textilen Halbzeugs bzw. des Halbzeugs aus textilverstärktem Kunststoff von einem ursprünglichen ersten Umfang auf einen gegenüber einer Bezugsebene des textilen Halbzeugs bzw. des Halbzeugs aus textilverstärktem Kunststoff versetzten kleineren zweiten Umfang; Bilden von Falten aus den bei dem Verformungsschritt gestauchten Bereichen, um zumindest zwei, insbesondere vier, elastische Anschlussstellen und weitere durch die Falten gebildete Krafteinleitungsstellen zu formen. Dieses Verfahren ist besonders wirtschaftlich, da, wie oben bereits ausgeführt, zusätzliche Gummilager überflüssig sind und die Trägerstruktur einstückig auf einfache Weise herstellbar ist, da das überschüssige Material der oberen Schale und der unteren Schale nicht mehr weggeschnitten werden muss, sondern in der/den elastischen Anschlussstelle/-n weiterverwendet wird.

Vorzugsweise ist der Aufbau der Trägerstruktur mehrlagig, wobei die Lagen in einem sogenannten Preformingprozess in Zwischenschritten fixiert werden.

Im Nachfolgenden wird eine Ausführungsform der Erfindung unter Bezugnahme auf die beigefügte Zeichnung näher beschrieben. Es zeigt:
Fig. 1A - 1C verschiedene Ansichten einer Trägerstruktur gemäß einer Ausführungsform der Erfindung; und
Fig. 2 eine perspektivische Ansicht eines vorderen Teils einer Trägerstruktur gemäß einer Ausführungsform.

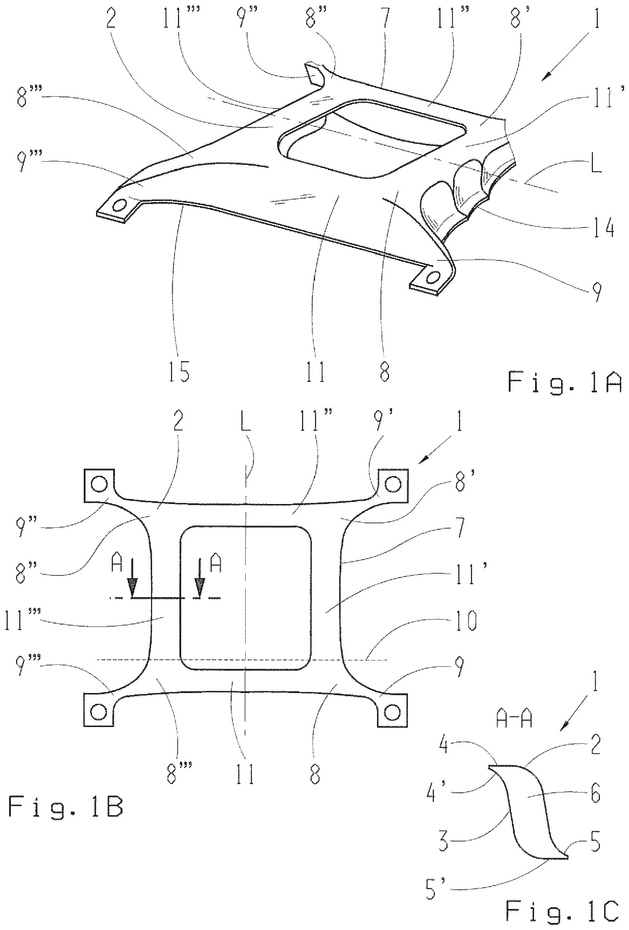

Figuren 1A bis 1C zeigen verschiedene Ansichten einer Trägerstruktur 1 gemäß einer Ausführungsform der Erfindung, wobei Figur 1A eine perspektivische Ansicht der Trägerstruktur zeigt, Figur 1B eine Draufsicht auf die Trägerstruktur und Figur 1C einen Schnitt entlang der in Figur 1B dargestellten Linie A-A. Die Trägerstruktur 1 bildet einen Achsträger bzw. Hilfsrahmen für ein Kraftfahrzeug. In der hier dargestellten Ausführungsform ist die Trägerstruktur 1 zweischalig mit einer oberen Schale 2 und einer unteren Schale 3 (siehe insbesondere Figur 1 C) ausgebildet, welche miteinander fest verbunden sind und ein Rahmenelement 7 bilden. Die obere Schale 2 und die untere Schale 3 sind jeweils S-förmig (hier spiegelbildlich verkehrt herum dargestellt) ausgebildet, so dass die Verbindung der oberen Schale 2 mit der unteren Schale 3 an deren jeweiligen im Wesentlichen geraden oberen bzw. unteren Flächen 4, 4', 5, 5' beispielsweise mittels Kleben erfolgt. Zwischen der oberen Schale 2 und der unteren Schale 3 ist ein Hohlraum 6 gebildet, welcher jedoch auch mit einem Material geringer Dichte, wie oben bereits beschrieben, gefüllt sein kann. Die Wandstärke der oberen bzw. unteren Schale 2, 3 beträgt 4 bis 5 mm. Das Rahmenelement 7 ist aus einem faserverstärkten Kunststoff hergestellt und weist eine im Wesentlichen viereckige Form mit vier Eckabschnitten 8, 8', 8", 8'" auf, wobei von jedem Eckabschnitt 8, 8', 8", 8'" eine elastische Anschlussstelle 9, 9', 9", 9'" in der Richtung quer zur Längsachse L des Kraftfahrzeugs abragt. Die elastischen Anschlussstellen 9, 9', 9", 9"', welche als Krafteinleitungsstellen dienen, sind einstückig mit dem Rahmenelement 7 durch textiles Falten gebildet. Durch die so ausgebildeten elastischen Anschlussstellen 9, 9', 9', 9'" ist eine Elastizität bzw. Flexibilität in Richtung der Längsachse L gegeben und gleichzeitig eine Steifigkeit in der Richtung quer zu der Längsachse L.

Um eine weitere Reduzierung der Stößigkeit des Fahrwerks wie oben bereits beschrieben zu erreichen, ist die Trägerstruktur 1 in dem Bereich der Anbindung an die Karosserie, also an den elastischen Anschlussstellen 9, 9', 9", 9'" verjüngt ausgebildet bzw. der zwischen der oberen Schale 2 und der unteren Schale 3 ausgebildete Hohlraum 6 wird verjüngt. Der Abstand zwischen der oberen und der unteren Schale 2, 3 beträgt dabei in den verjüngten elastischen Anschlussstellen 9, 9', 9", 9'" maximal 5 mm. Im Verlauf von den jeweiligen elastischen Anschlussstellen 9, 9', 9", 9'" in Richtung zu dem viereckigen Rahmenelement 7 laufen die obere Schale 2 bzw. die untere Schale 3 V-förmig über eine Länge von 10 bis 20 cm in einen Öffnungsabstand von 10 cm.

Wenn in einer alternativen Ausführungsform, welche hier im Detail nicht dargestellt ist, die Trägerstruktur 1 lediglich zwei elastische Anschlussstellen 9, 9'" aufweist, dann würde das Rahmenteil 7 in etwa an der durch das Bezugszeichen 10 gekennzeichneten gestrichelten Linie in Figur 1B enden, so dass die elastischen Anschlussstellen 9, 9'" lediglich durch ein bügelartiges Element, welches hier durch das Bezugszeichen 11 gekennzeichnet ist, verbunden sind. In der Variante mit vier elastischen Anschlussstellen 9, 9', 9", 9'" sind dagegen auch vier bügelartige Elemente 11, 11', 11", 11'" vorhanden, welche dann das Rahmenelement 7 aufbauen.

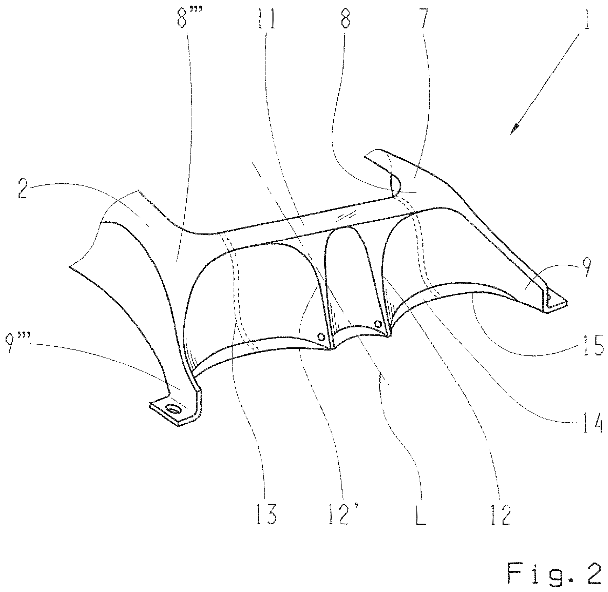

Durch Vorsehen der einstückig mit dem Rahmenelement 7 ausgebildeten elastischen Anschlussstellen 9, 9', 9", 9'" wie oben beschrieben, ist das Vorsehen zusätzlicher Gummilager überflüssig. Die durch textile Faltenbildung entlang der Kanten der Trägerstruktur 1 gebildeten Falten 12, 12' (siehe Figur 2) und der ebenso gebildeten elastischen Anschlussstellen 9, 9', 9", 9'" dienen aufgrund der durchgängigen Faserstruktur aus Lang- oder Endlosfasern in dem Kunststoff der Trägerstruktur 1 als Krafteinleitungsstellen.

Figur 2 zeigt eine perspektivische Ansicht eines vorderen Teils einer Trägerstruktur 1 gemäß einer Ausführungsform, wobei die Trägerstruktur 1 zusätzlich mit Verstärkungselementen 13, welche hier als Verstärkungsrippen ausgebildet sind, versehen ist. Auch der durch die textile Faltung an der Unterseite 15 der Trägerstruktur 1 entstehende Kragen 14 kann zusätzlich mit Verstärkungselementen versehen sein. Die Verstärkungselemente 13 können aus Kunststoff-Pressmassen, insbesondere aus faserverstärkten Thermoplasten oder Duroplasten, hergestellt sein.

### Bezugszeichen

- 1: Trägerstruktur
- 2: obere Schale
- 3: untere Schale
- 4, 4': obere gerade Flächen
- 5, 5': untere gerade Flächen
- 6: Hohlraum
- 7: Rahmenelement
- 8, 8', 8", 8"': Eckabschnitte
- 9, 9', 9", 9'": elastische Anschlussstelle
- 10: gestrichelte Linie
- 11, 11', 11", 11'": bügelartige Elemente
- 12, 12': Falten
- 13: Verstärkungselement
- 14: Kragen
- 15: Unterseite

## Patentansprüche

1. Trägerstruktur (1), insbesondere Achsträger für ein Kraftfahrzeug, welche als ein- oder mehrschalig ausgebildetes Rahmenelement (7) aus faserverstärktem Kunststoff hergestellt ist, wobei das Rahmenelement (7) zumindest eine elastische Anschlussstelle (9, 9', 9", 9"') zum Anschluss an ein Aggregat aufweist, und wobei die zumindest eine elastische Anschlussstelle (9, 9', 9", 9"') einstückig mit dem Rahmenelement (7) ausgebildet ist, **dadurch gekennzeichnet, dass** die zumindest eine elastische Anschlussstelle (9, 9', 9", 9"') durch textile Faltenbildung des faserverstärkten Kunststoffs gebildet ist.

2. Trägerstruktur (1) gemäß Anspruch 1, **dadurch gekennzeichnet, dass** die Trägerstruktur (1) mindestens zwei elastische Anschlussstellen (9, 9"'), insbesondere vier elastische Anschlussstellen (9, 9', 9", 9"') aufweist.

3. Trägerstruktur (1) gemäß Anspruch 1 oder 2, **dadurch gekennzeichnet, dass** das Rahmenelement (7) zweischalig mit einer oberen Schale (2) und einer unteren Schale (3) ausgebildet ist, wobei zwischen der oberen Schale (2) und der unteren Schale (3) ein Hohlraum (6) eingeschlossen ist.

4. Trägerstruktur (1) gemäß Anspruch 1 oder 2, **dadurch gekennzeichnet, dass** das Rahmenelement (7) einschalig mit einem offenen Profil ausgebildet ist.

5. Trägerstruktur (1) gemäß einem der Ansprüche 1 bis 4, **dadurch gekennzeichnet, dass** das Rahmenelement (7) einen im Wesentlichen S-förmigen Querschnitt aufweist.

6. Trägerstruktur (1) gemäß einem der Ansprüche 1 bis 5, **dadurch gekennzeichnet, dass** die zumindest eine elastische Anschlussstelle (9, 9', 9", 9"') in Richtung einer Längsachse (L) des Kraftfahrzeugs im Wesentlichen elastisch ist und in einer Richtung senkrecht zu der Längsachse (L) im Wesentlichen steif ist.

7. Trägerstruktur (1) gemäß einem der Ansprüche 1 bis 6, **dadurch gekennzeichnet, dass** der faserverstärkte Kunststoff mit langfaserigen und/oder endlosfaserigen Kunststofffasern verstärkt ist.

8. Trägerstruktur (1) gemäß einem der Ansprüche 1 bis 7, **dadurch gekennzeichnet, dass** das Rahmenelement (7) im Bereich der zumindest einen elastischen Anschlussstelle (9, 9', 9", 9"') verjüngt ausgebildet ist.

9. Trägerstruktur (1) gemäß einem der Ansprüche 1 bis 8, **dadurch gekennzeichnet, dass** das Rahmenelement (7) einen im Wesentlichen rechteckigen Körper mit vier Eckabschnitten (8, 8', 8", 8"') aufweist, wobei von jedem Eckabschnitt (8, 8', 8", 8"') eine elastische Anschlussstelle (9, 9', 9", 9"') in der Richtung quer zur Längsachse (L) des Kraftfahrzeugs abragt.

10. Trägerstruktur (1) gemäß einem der Ansprüche 1 bis 8, **dadurch gekennzeichnet, dass** das Rahmenelement (7) zwei elastische Anschlussstelle (9, 9"') aufweist, welche durch einen bügelartiges Element (11) verbunden sind.

11. Trägerstruktur (1) gemäß einem der Ansprüche 1 bis 10, **dadurch gekennzeichnet, dass** die Trägerstruktur (1) mit Verstärkungselementen (13), insbesondere mit Verstärkungsrippen, ausgebildet ist, wobei die Verstärkungselemente (13) aus Kunststoff-Pressmassen, insbesondere aus faserverstärkten Thermoplasten oder Duroplasten, hergestellt sind.

12. Trägerstruktur (1) gemäß Anspruch 3, **dadurch gekennzeichnet, dass** die obere Schale (2) und die untere Schale (3) mittels Fügen, insbesondere durch Kleben, Nieten oder Schrauben, oder durch Schweißen miteinander verbunden sind.

13. Trägerstruktur (1) gemäß einem der Ansprüche 3 und 12, **dadurch gekennzeichnet, dass** der Hohlraum (6) von einem Material mit geringer Dichte, insbesondere von einem Schaum, Waben oder Balsaholz, ausgefüllt ist.

14. Verfahren zum Herstellen einer Trägerstruktur (1), insbesondere gemäß einem der Ansprüche 1 bis 13, wobei das Verfahren die folgenden Schritte umfasst:
- Herstellen eines textilen Halbzeugs oder eines Halbzeugs aus textilverstärktem Kunststoff zur Bildung der Trägerstruktur (1) mit einem Rahmenelement (7), welches zumindest zwei Eckabschnitte, insbesondere vier Eckabschnitte aufweist;
- Verformen des textilen Halbzeugs bzw. des Halbzeugs aus textilverstärktem Kunststoff von einem ursprünglichen ersten Umfang auf einen gegenüber einer Bezugsebene des textilen Halbzeugs bzw. des Halbzeugs aus textilverstärktem Kunststoff versetzten kleineren zweiten Umfang;
- Bilden von Falten (12, 12', 9, 9', 9", 9'") aus den bei dem Verformungsschritt gestauchten Bereichen, um zumindest zwei, insbesondere vier, elastische Anschlussstellen (9, 9', 9", 9"') und weitere durch die Falten (12, 12') gebildete Krafteinleitungsstellen zu formen.

## Claims

1. Support structure (1), in particular axial support for a motor vehicle, which is produced as a frame element (7) of single- or multi-shell design and composed of fibre-reinforced plastic, wherein the frame element (7) has at least one elastic connection point (9, 9', 9", 9"') for connection to an assembly, and wherein the at least one elastic connection point (9, 9', 9", 9"') is formed integrally with the frame element (7), **characterized in that** the at least one elastic connection point (9, 9', 9", 9"') is formed by textile creasing of the fibre-reinforced plastic.

2. Support structure (1) according to Claim 1, **characterized in that** the support structure (1) has at least two elastic connection points (9, 9"'), in particular four elastic connection points (9, 9', 9", 9"').

3. Support structure (1) according to Claim 1 or 2, **characterized in that** the frame element (7) is of two-shell design with an upper shell (2) and a lower shell (3), wherein a cavity (6) is enclosed between the upper shell (2) and the lower shell (3).

4. Support structure (1) according to Claim 1 or 2, **characterized in that** the frame element (7) is of single-shell design with an open profile.

5. Support structure (1) according to one of Claims 1 to 4, **characterized in that** the frame element (7) has a substantially S-shaped cross section.

6. Support structure (1) according to one of Claims 1 to 5, **characterized in that** the at least one elastic connection point (9, 9', 9", 9"') is substantially elastic in the direction of a longitudinal axis (L) of the motor vehicle and is substantially stiff in a direction perpendicular to the longitudinal axis (L).

7. Support structure (1) according to one of Claims 1 to 6, **characterized in that** the fibre-reinforced plastic is reinforced with plastics fibres having long fibres and/or continuous fibres.

8. Support structure (1) according to one of Claims 1 to 7, **characterized in that** the frame element (7) is of tapered design in the region of the at least one elastic connection point (9, 9', 9", 9"').

9. Support structure (1) according to one of Claims 1 to 8, **characterized in that** the frame element (7) has a substantially rectangular body with four corner portions (8, 8', 8", 8"'), wherein an elastic connection point (9, 9', 9", 9"'), protrudes from each corner portion (8, 8', 8", 8"') in the direction transversely with respect to the longitudinal axis (L) of the motor vehicle.

10. Support structure (1) according to one of Claims 1 to 8, **characterized in that** the frame element (7) has two elastic connection point (9, 9"') which are connected by a bow-like element (11).

11. Support structure (1) according to one of Claims 1 to 10, **characterized in that** the support structure (1) is formed with reinforcing elements (13), in particular with reinforcing ribs, wherein the reinforcing elements (13) are produced from plastics moulding materials, in particular from fibre-reinforced thermoplastics or thermosetting plastics.

12. Support structure (1) according to Claim 3, **characterized in that** the upper shell (2) and the lower shell (3) are connected to each other by means of joining, in particular by means of adhesive bonding, riveting or screwing, or by welding.

13. Support structure (1) according to either of Claims 3 and 12, **characterized in that** the cavity (6) is filled by a material of low density, in particular by foam, honeycomb or balsa wood.

14. Method of producing a support structure (1) in particular according to one of Claims 1 to 13, wherein the method comprises the following steps:
- producing a textile semi-finished product or a semi-finished product composed of textile-reinforced plastic in order to form the support structure (1) with a frame element (7) which has at least two corner portions, in particular four corner portions;
- deforming the textile semi-finished product or the semi-finished product composed of textile-reinforced plastic from an original first circumference to a smaller second circumference which is offset in relation to a reference plane of the textile semi-finished product or the semi-finished product composed of textile-reinforced plastic;
- forming creases (12, 12', 9, 9', 9", 9"') from the regions compressed during the deformation step in order to form at least two, in particular four, elastic connection points (9, 9', 9", 9"') and further force introduction points formed by the creases (12, 12').

## Revendications

1. Structure porteuse (1), en particulier support d'essieu pour un véhicule automobile, qui est fabriquée sous forme d'élément de cadre (7) réalisé avec une ou plusieurs coques en plastique renforcé par des fibres, l'élément de cadre (7) présentant au moins un point de raccordement élastique (9, 9', 9", 9"') pour le raccordement à un groupe, et l'au moins un point de raccordement élastique (9, 9', 9", 9"') étant réalisé d'une seule pièce avec l'élément de cadre (7), **caractérisée en ce que** l'au moins un point de raccordement élastique (9, 9' 9", 9"') est formé par formation de plis textiles du plastique renforcé par des fibres.

2. Structure porteuse (1) selon la revendication 1, **caractérisée en ce que** la structure porteuse (1) présente au moins deux points de raccordement élastiques (9, 9"'), en particulier quatre points de raccordement élastiques (9, 9', 9'', 9"').

3. Structure porteuse (1) selon la revendication 1 ou 2, **caractérisée en ce que** l'élément de cadre (7) est réalisé avec deux coques, avec une coque supérieure (2) et une coque inférieure (3), une cavité (6) étant formée entre la coque supérieure (2) et la coque inférieure (3).

4. Structure porteuse (1) selon la revendication 1 ou 2, **caractérisée en ce que** l'élément de cadre (7) est réalisé avec une coque avec un profilé ouvert.

5. Structure porteuse (1) selon l'une quelconque des revendications 1 à 4, **caractérisée en ce que** l'élément de cadre (7) présente une section transversale essentiellement en forme de S.

6. Structure porteuse (1) selon l'une quelconque des revendications 1 à 5, **caractérisée en ce que** l'au moins un point de raccordement élastique (9, 9', 9", 9"') est essentiellement élastique dans la direction d'un axe longitudinal (L) du véhicule automobile et est essentiellement rigide dans une direction perpendiculaire à l'axe longitudinal (L).

7. Structure porteuse (1) selon l'une quelconque des revendications 1 à 6, **caractérisée en ce que** le plastique renforcé par des fibres est renforcé par des fibres de plastique à fibres longues et/ou à fibres sans fin.

8. Structure porteuse (1) selon l'une quelconque des revendications 1 à 7, **caractérisée en ce que** l'élément de cadre (7) est réalisé de manière rétrécie dans la région de l'au moins un point de raccordement élastique (9, 9', 9'', 9''').

9. Structure porteuse (1) selon l'une quelconque des revendications 1 à 8, **caractérisée en ce que** l'élément de cadre (7) présente un corps essentiellement rectangulaire avec quatre portions de coin (8, 8', 8", 8"'), un point de raccordement élastique (9, 9', 9", 9"') faisant saillie depuis chaque portion de coin (8, 8', 8", 8"') dans la direction transversale à l'axe longitudinal (L) du véhicule automobile.

10. Structure porteuse (1) selon l'une quelconque des revendications 1 à 8, **caractérisée en ce que** l'élément de cadre (7) présente deux point de raccordement élastique (9, 9"') qui sont raccordés par un élément de type étrier (11).

11. Structure porteuse (1) selon l'une quelconque des revendications 1 à 10, **caractérisée en ce que** la structure porteuse (1) est réalisée avec des éléments de renforcement (13), en particulier avec des nervures de renforcement, les éléments de renforcement (13) étant fabriqués à partir de masses pressées en plastique, en particulier à partir de matériaux thermoplastiques ou duroplastiques renforcés par des fibres.

12. Structure porteuse (1) selon la revendication 3, **caractérisée en ce que** la coque supérieure (2) et la coque inférieure (3) sont raccordées l'une à l'autre par assemblage, en particulier par collage, rivetage ou vissage, ou par soudage.

13. Structure porteuse (1) selon l'une quelconque des revendications 3 et 12, **caractérisée en ce que** la cavité (6) est remplie avec un matériau de faible densité, en particulier avec une mousse, un matériau en nid d'abeilles ou du balsa.

14. Procédé de fabrication d'une structure porteuse (1), en particulier selon l'une quelconque des revendications 1 à 13, le procédé comprenant les étapes suivantes :
- fabrication d'un produit semi-fini textile ou d'un produit semi-fini en plastique renforcé par du textile pour la formation de la structure porteuse (1) avec un élément de cadre (7), qui présente au moins deux portions de coins, en particulier quatre portions de coins ;
- déformation du produit semi-fini textile ou du produit semi-fini en plastique renforcé par du textile d'une première périphérie initiale à une deuxième périphérie plus petite décalée par rapport à un plan de référence du produit semi-fini textile ou du produit semi-fini en plastique renforcé par du textile ;
- formation de plis (12, 12', 9, 9', 9'', 9''') à partir des régions écrasées lors de l'opération de déformation afin de former au moins deux, en particulier quatre, points de raccordement élastiques (9, 9', 9", 9"') et d'autres points d'introduction de force formés par les plis (12, 12').
